# FASCICULE DE BREVET EUROPEEN

(11) **EP 2 648 978 B1**
(45) Date de publication et mention de la délivrance du brevet: **09.09.2015**
(21) Numéro de dépôt: 11799783.3
(22) Date de dépôt: 25.11.2011
(51) Int. Cl.: B65B 5/08, B65B 35/40, B65B 35/44, B65G 47/08, B65G 47/26

(54) **PROCEDE ET DISPOSITIF D'ENCAISSAGE DESTINES A REALISER UN ENCAISSAGE SEQUENTIEL DE LOTS DE PRODUITS A L'INTERIEUR DE RECEPTACLES DE CONDITIONNEMENT**
EINPACKVERFAHREN UND VORRICHTUNG ZUM SEQUENZIELLEN EINPACKEN VON PRODUKTCHARGEN IN VERPACKUNGSBEHÄLTERN
BOXING METHOD AND DEVICE INTENDED TO SEQUENTIALLY BOX BATCHES OF PRODUCTS INSIDE PACKAGING RECEPTACLES

(30) Priorité: 08.12.2010 FR 1060268
(43) Date de publication de la demande: 16.10.2013
(73) Titulaire: Tecma Pack, 77120 Coulommiers (FR)
(72) Inventeur: LAUDET, Gérard, F-77510 Rebais (FR)
(74) Mandataire: Derambure Conseil
(86) Numéro de dépôt international: PCT/FR2011/052773
(87) Numéro de publication internationale: WO 2012/076781

(56) Documents cités:
- EP-A1- 0 300 860
- EP-A1- 0 533 453
- EP-A1- 1 992 579
- WO-A1-2007/112415
- DE-A1- 1 914 353
- GB-A- 2 050 981
- US-A- 5 209 339

## Description

L'invention concerne le domaine technique de l'emballage. Plus particulièrement, l'invention se rapporte au domaine de l'encaissage séquentiel de lots de produits identiques ou similaires à l'intérieur de réceptacles de conditionnement.

L'invention s'applique notamment mais de manière non exclusive aux cas des produits laitiers frais, des produits fromagers, des compotes ainsi qu'à tout autre produit de natures ou de destinations diverses mais pouvant être considérés comme identiques ou similaires afin de permettre leur regroupement en lots.

Pour la production de tels lots de produits, il convient de disposer ou de fabriquer le contenu à emballer, les emballages primaires (pots et opercules) éventuellement agencés en plaquettes. Puis sont réalisés les produits eux-mêmes, c'est-à-dire que les emballages primaires sont emplis avec le ou les contenus souhaités puis fermés par mise en place des opercules. Puis sont formés les lots de produits par regroupement et éventuellement superposition de ces produits. Enfin ces lots de produits sont disposés dans des réceptacles de conditionnement en carton ou matériau analogue pour assurer leur conditionnement et leur transport vers les marchés de distribution.

Il est connu de l'état de la technique le document FR-A-2 697 512 qui décrit un procédé d'encaissage de lots constitués de m rangées de n produits à l'intérieur de réceptacles de conditionnement consistant à :
▪ entraîner un flux continu de produits vers une table de regroupement sur laquelle sont agencés autant de couloirs que de rangées de produits formant un lot ;
▪ surveiller les couloirs de manière à identifier lorsque suffisamment de produits ont été accumulés par couloir sur la table de regroupement pour constituer un lot ;
▪ arrêter le flux continu d'approvisionnement de produits et escamoter progressivement la table de regroupement de manière à constituer le lot de produits.

Un tel procédé présente plusieurs inconvénients. Notamment, la cadence est nécessairement limitée puisque le flux continu d'approvisionnement doit être stoppé dés lors que le nombre de produits accumulés sur la table de regroupement constitue un lot. Cela implique un temps d'arrêt systématique qui génère *in fine* un retard de cadence important. En outre, la déviation des produits provenant du flux continu d'approvisionnement afin de les répartir vers chacun des couloirs appartenant à la table de regroupement freine l'avancée de ces produits vers cette table de regroupement et génère donc aussi un retard de cadence.

Il est également connu de l'état de la technique des procédés d'encaissage de lots de m rangées de n produits à l'intérieur de réceptacles de conditionnement consistant à :
▪ entraîner le long d'une première voie d'approvisionnement s'étendant selon une direction longitudinale, un flux continu d'approvisionnement de produits alignés ;
▪ constituer une accumulation de produits selon m rangées respectivement positionnées le long de m sous-voies de placement distinctes, disposées de façon adjacente sur la première voie d'approvisionnement ;
▪ entraînement, dans la direction longitudinale, n produits de chaque rangée le long de m sous-voie de placement de manière à former un premier lot de m x n produits ; et
▪ encaisser de façon séquentielle lesdites m rangées de n produits formant le premier lot à l'intérieur d'un premier réceptacle de conditionnement.

Toutefois, cette autre réalisation présente également des inconvénients. D'une part, le retard généré du fait du déport des produits le long des m sous-voies de placement n'est pas résolu. D'autre part, même si l'entraînement d'une deuxième série de n produits le long des m sous-voies de placement peut être initié avant l'issue de l'opération d'encaissage séquentiel du premier lot dans les réceptacles de conditionnement, il n'en reste pas moins qu'une phase d'attente doit être observée afin d'éviter toute collision entre les produits formant le premier lots et les produits formant le second lot. En outre, l'accumulation de produits avant constitution des lots génère nécessairement un encombrement supplémentaire.

Enfin, il est aussi connu de l'art antérieur les documents suivants : WO-A1-2007/112415, DE-A1-12 14 353, EP-A1-0 300 860, EP-A1-1 992 579, GB-A-2 050 981 et EP-A1-0 533 453. Toutefois, tout comme les solutions présentées ci-avant, les dispositifs décrits dans ces documents présentent des cadences limitées.

Dans ce contexte, la présente invention a pour but de proposer un dispositif et un procédé de suremballage exempt de l'une au moins des limitations précédemment évoquées.

A cet effet, et selon un premier aspect, l'invention concerne un procédé d'encaissage destiné à réaliser à partir d'un flux continu d'approvisionnement de produits analogues un encaissage séquentiel de lots de produits à l'intérieur de réceptacles de conditionnement, les lots étant constitués de m rangées de n produits chacun, m et n étant des entiers supérieurs, ou égaux à un, le produit m x n étant strictement superieur à 1, le procédé d'encaissage comportant une succession d'étapes consistant à :
▪ entraîner le long d'une première voie d'approvisionnement s'étendant selon une direction longitudinale, un flux continu d'approvisionnement de produits alignés et ;
▪ déporter par m déplacements dans des directions transversales sans retard par rapport au flux continu d'approvisionnement, m successions de n produits selon m rangées respectivement positionnées le long de m sous-voies de placement distinctes, disposées de façon adjacente sur la première voie d'approvisionnement ;
▪ accumuler et rassembler dans la direction longitudinale les n produits de chaque rangée le long de m sous-voie de placement de manière à former un premier lot de m x n produits ;
▪ encaisser de façon séquentielle lesdites m rangées de n produits formant le premier lot à l'intérieur d'un premier réceptacle de conditionnement.

Le procédé d'encaissage selon l'invention consiste à initier l'étape de déport d'une première succession de n produits destinée à former une première rangée d'un deuxième lot durant la phase d'accumulation de l'une des rangées de n produits constituant le premier lot ; cette première succession de n produits destinés à former une première rangée d'un deuxième lot étant déportée dans un déplacement transversal sans retard par rapport au flux continu d'approvisionnement, le long d'une sous-voie de placement tampon distincte et adjacente des m sous-voies de placement sur lesquelles ont été constituées les m rangées de n produits formant le premier lot ; de manière à autoriser l'accumulation et le rassemblement de produits formant le premier lot sans interrompre ou freiner le flux continu d'approvisionnement de produits ; et initier l'étape d'encaissage du premier lot sans délai substantiel après l'accumulation et le rassemblement du premier lot, de manière à autoriser l'encaissage sans interrompre ou freiner le flux continu d'approvisionnement.

L'utilisation d'une sous-voie de placement tampon distincte des sous-voies de placement dans lesquels s'accumulent les produits d'un premier lot permet de poursuivre le déport, l'accumulation et le rassemblement des produits provenant du flux continu d'approvisionnement même lorsque les produits formant le premier lot en cours d'encaissage reste, pendant un intervalle de temps, en place le long des sous-voies de placement correspondantes. Il est ainsi possible de maintenir le flux continu d'approvisionnement des produits sans interruption et, de ce fait, de maintenir une cadence élevée.

Selon une réalisation, l'étape de déport des m successions de n produits consiste à positionner les m rangées de n produits le long des m sous-voies de placement de sorte que les m rangées de n produits sont espacées les unes des autres d'une distance d'espacement prédéterminée dans la direction transversale. Cela permet d'éviter la collision des produits entre eux, qui risquerait de provoquer des chutes ou des déplacements imprévus des produits et donc d'entraîner des difficultés lors des étapes suivantes du procédé d'encaissage pouvant conduire jusqu'à l'arrêt du flux d'approvisionnement de produits.

Dans cette hypothèse, selon un premier mode de réalisation des rails de placement d'une épaisseur correspondant à la distance d'espacement sont agencés de sorte à assurer le guidage, le positionnement transversal et le maintien en position des m successions de n produits le long des m sous-voies de placement. De la même manière que précédemment, la présence de rails de placement diminue les risques de positionnement aléatoire des produits dans les sous-voies de placement et facilite donc l'étape d'accumulation, de rassemblement et d'encaissage des lots de produits dans les réceptacles de conditionnement.

Plus particulièrement, selon une réalisation l'étape d'encaissage est opérée par des moyens d'encaissage comprenant m rangées de n têtes de préhension, les m rangées de n têtes de préhension se rapprochant les unes des autres dans la direction transversale lors de l'étape d'encaissage des m rangées de n produits à l'intérieur d'un réceptacle de conditionnement. L'utilisation de têtes de préhensions capables de se déplacer les unes par rapport aux autres dans la direction transversale permet d'assurer facilement, rapidement et de manière sécurisée le regroupement transversal des produis placés sur des sous-voies de placement distinctes en vue de leur encaissage dans les réceptacles de conditionnement.

Dans cette hypothèse, selon un second mode de réalisation, le procédé d'encaissage comporte une étape de regroupement s'opérant à l'issue de l'étape d'accumulation des m rangées de n produits et consistant à regrouper dans la direction transversale les m rangées de n produits de manière à rendre ces m rangées attenantes les unes aux autres dans cette direction transversale. La réalisation de cette étape intermédiaire de regroupement permet, comme précédemment, d'assurer le regroupement transversal des produis placés sur des sous-voies de placement distinctes sans avoir recours à une technologie supplémentaire coopérant avec les moyens d'encaissage pour assurer le déplacement des têtes de préhension.

Dans ce cas, selon une réalisation l'étape de regroupement est réalisée par l'intermédiaire d'un bras tacleur positionné entre la sous-voie de placement tampon et la sous-voie de placement adjacente à cette sous-voie de placement tampon, le bras tacleur se déplaçant selon la direction transversale pour regrouper dans la direction transversale les m rangées de n produits de manière à rendre ces m rangées attenantes les unes aux autres dans cette direction transversale. Un tel bras tacleur assure facilement, rapidement et de manière sécurisée le regroupement transversal des m rangées de n produits, sans gêner l'arrivée des produits dans la sous-voie de placement tampon.

Selon une première variante, l'étape d'accumulation et de rassemblement des n produits de chaque rangée est réalisée par l'intermédiaire d'une paroi d'arrêt stoppant la progression des n produits le long des m sous-voies de placement. C'est une solution technique à la fois simple et efficace pour permettre le regroupement des produits dans chaque sous-voie de placement.

Selon une seconde variante, l'étape d'accumulation et de rassemblement des n produits de chaque rangée est réalisée par l'intermédiaire d'une paroi d'arrêt ralentissant sans la stopper la progression des n produits le long des m sous-voies de placement. Cette autre solution peut être utile pour maintenir les produits en mouvement avant leur encaissage dans les réceptacles de conditionnement et étirer ainsi la ligne de production.

Selon une réalisation, les réceptacles de conditionnement sont mis en forme puis transportés le long d'une deuxième voie d'approvisionnement positionnée à proximité des sous-voies de placement et s'étendant selon une direction sensiblement longitudinal. La mise en volume des réceptacles d'approvisionnement est ainsi assurée à proximité du poste d'encaissage ce qui favorise leur approvisionnement sans générer de contraintes d'espace trop importantes.

Dans ce cas, les réceptacles de conditionnement sont déplacés selon un sens de déplacement opposé au sens de déplacement des m rangées de n produits accumulés le long des m sous-voies de placement. Cela permet d'assurer un positionnement optimal du flux d'approvisionnement de produit par rapport au flux d'approvisionnement de réceptacles de conditionnement et offre ainsi la possibilité d'intégrer la ligne d'encaissage dans une ligne de production plus vaste intégrant par exemple la production des produits.

Selon une réalisation, les réceptacles de conditionnement sont formés par pliage et collage d'un feuillet en amont de la deuxième voie d'approvisionnement.

Selon un deuxième aspect, l'invention concerne un dispositif d'encaissage destiné à réaliser à un procédé d'encaissage séquentiel de lots de produits à l'intérieur de réceptacles de conditionnement selon l'invention, les lots étant constitués de m rangées de n produits chacun, m et n étant des entiers supérieurs ou égaux à un, le produit m x n étant strictement supérieur à 1, le dispositif d'encaissage comportant :
▪ une première voie d'approvisionnement s'étendant selon une direction longitudinale ;
▪ des moyens d'entraînement aptes à entraîner un flux continu d'approvisionnement de produits alignés le long de la première voie d'approvisionnement ;
▪ des moyens de déport aptes à déporter, par m déplacements dans des directions transversales sans retard par rapport au flux continu d'approvisionnement, m succession de n produits selon m rangées respectivement positionnées le long de m sous-voies de placement distinctes disposées de façon adjacente sur la première voie d'approvisionnement ;
▪ des moyens d'accumulation aptes à accumuler et rassembler dans la direction longitudinale les n produits de chaque rangée le long de sa sous-voie de placement de manière à former un premier lot de m x n produits ;
▪ des moyens d'encaissage apte à encaisser de façon séquentielle lesdites m rangées de n produits formant le premier lot à l'intérieur d'un premier réceptacle de conditionnement ;

Selon l'invention, les moyens de déport sont aptes à déporter une première succession de n produits destinés à former une première rangée d'un deuxième lot, dans un déplacement transervsal sans retard par rapport au flux continu d'approvisionnement, le long d'une sous-voie de placement tampon distincte et adjacente des m sous-voies de placement sur lesquelles peuvent être constituées les m rangées de n produits formant le premier lot, de manière à autoriser l'accumulation et le rassemblement de produits formant le premier lot sans interrompre ou freiner le flux continu d'approvisionnement de produits et les moyens d'encaissage sont agencés de sorte à réaliser l'encaissage du premier lot sans délai substantiel après l'accumulation et le rassemblement du premier lot, de manière à autoriser l'encaissage sans interrompre ou freiner le flux continu d'approvisionnement.

L'utilisation d'une sous-voie de placement tampon distincte des sous-voies de placement dans lesquels s'accumulent les produits d'un premier lot permet de poursuivre le déport, l'accumulation et le rassemblement des produits provenant du flux continu d'approvisionnement même lorsque les produits formant le premier lot en cours d'encaissage reste, pendant un intervalle de temps, en place le long des sous-voies de placement correspondantes. Il est ainsi possible de maintenir le flux continu d'approvisionnement des produits sans interruption et, de ce fait, de maintenir une cadence élevée.

Selon une réalisation, les m sous-voies de placement sont agencées de sorte que les m rangées de n produits sont espacées les unes des autres d'une distance d'espacement prédéterminée dans la direction transversale. On évite ainsi la collision des produits entre eux qui risquerait de provoquer des chutes ou des déplacements imprévus des produits et donc d'entraîner des difficultés lors des étapes suivantes du procédé d'encaissage pouvant conduire jusqu'à l'arrêt du flux d'approvisionnement de produits.

Dans ce cas, selon une réalisation le dispositif d'encaissage comprend des rails de placement d'une épaisseur correspondant à la distance d'espacement de sorte à assurer le guidage, le positionnement transversal et le maintien en position des m successions de n produits le long des m sous-voies de placement. La présence de rails de placement diminue les risques de positionnement aléatoire des produits dans les sous-voies de placement et facilite donc l'étape d'accumulation, de rassemblement et d'encaissage des lots de produits dans les réceptacles de conditionnement.

Dans ce cas et selon une réalisation, moyens d'encaissage comprenant m rangées de n têtes de préhension, les m rangées de n têtes de préhension étant aptes à se rapprocher les unes des autres dans la direction transversale de manière assurer l'encaissage des m rangées de n produits à l'intérieur d'un réceptacle de conditionnement. L'utilisation de têtes de préhensions capables de se déplacer les unes par rapport aux autres dans la direction transversale permet d'assurer facilement, rapidement et de manière sécurisée le regroupement transversal des produis placés sur des sous-voies de placement distinctes en vue de leur encaissage dans les réceptacles de conditionnement.

Selon une réalisation, le dispositif comporte un bras tacleur positionné entre la sous-voie de placement tampon et la sous-voie de placement adjacente à cette sous-voie de placement tampon, le bras tacleur étant apte à se déplacer selon la direction transversale pour regrouper dans la direction transversale les m rangées de n produits de manière à rendre ces m rangées attenantes les unes aux autres dans cette direction transversale. Ainsi, le regroupement transversal des produis placés sur des sous-voies de placement distinctes est assuré sans avoir recours à une technologie supplémentaire coopérant avec les moyens d'encaissage pour assurer le déplacement des têtes de préhension.

Selon une réalisation, les moyens d'accumulation comportent une paroi d'arrêt apte à stopper la progression des n produits le long des m sous-voies de placement. C'est une solution technique à la fois simple et efficace pour permettre le regroupement des produits dans chaque sous-voie de placement.

Selon une réalisation, les moyens d'accumulation comportent une paroi d'arrêt apte à ralentir sans la stopper la progression des n produits le long des m sous-voies de placement. Cette autre solution peut être utile pour maintenir les produits en mouvement avant leur encaissage dans les réceptacles de conditionnement et étirer ainsi la ligne de production.

Selon une réalisation, le dispositif d'encaissage comporte des moyens de formation aptes à mettre en forme des réceptacles de conditionnement et à transporter ces réceptacles de conditionnement le long d'une deuxième voie d'approvisionnement positionnée à proximité des sous-voies de placement et s'étendant selon une direction sensiblement longitudinal.

Cela permet d'assurer un positionnement optimal du flux d'approvisionnement de produit par rapport au flux d'approvisionnement de réceptacles de conditionnement et offre ainsi la possibilité d'intégrer la ligne d'encaissage dans une ligne de production plus vaste intégrant par exemple la production des produits.

Dans ce cas, selon une réalisation les moyens de formation sont aptes à transporter les réceptacles de conditionnement selon un sens de déplacement opposé au sens de déplacement des m rangées de n produits accumulés le long des m sous-voies de placement. La mise en volume des réceptacles d'approvisionnement est ainsi assurée à proximité du poste d'encaissage ce qui favorise leur approvisionnement sans générer de contraintes d'espace trop importantes.

Notamment, les moyens de formation peuvent permettre de former les réceptacles de conditionnement par pliage et collage d'un feuillet en amont de la deuxième voie d'approvisionnement.

Selon une réalisation, les moyens de déport comprennent : un module de préhension apte à enserrer une succession de n produits de manière à permettre l'entraînement de ces n produits dans un déplacement relatif vis-à-vis de la première voie d'approvisionnement ; un module de motorisation apte à assurer simultanément le déplacement du module de préhension dans la direction transversale, d'une part, et le déplacement de ce module de préhension dans la direction longitudinale sans perte de vitesse par rapport au flux continu d'approvisionnement, d'autre part ;de manière à assurer un déplacement de la succession de n produits dans la direction transversale sans retard par rapport au flux continu d'approvisionnement.

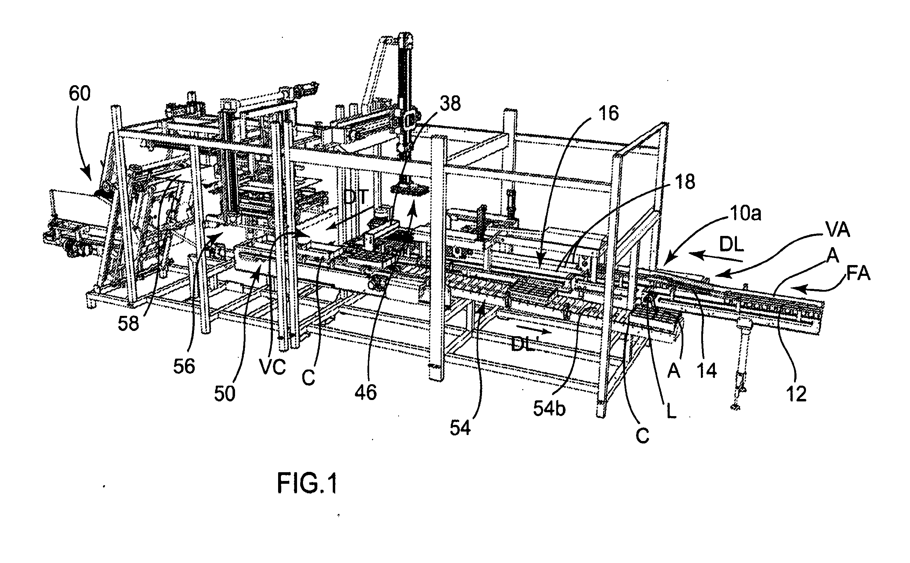

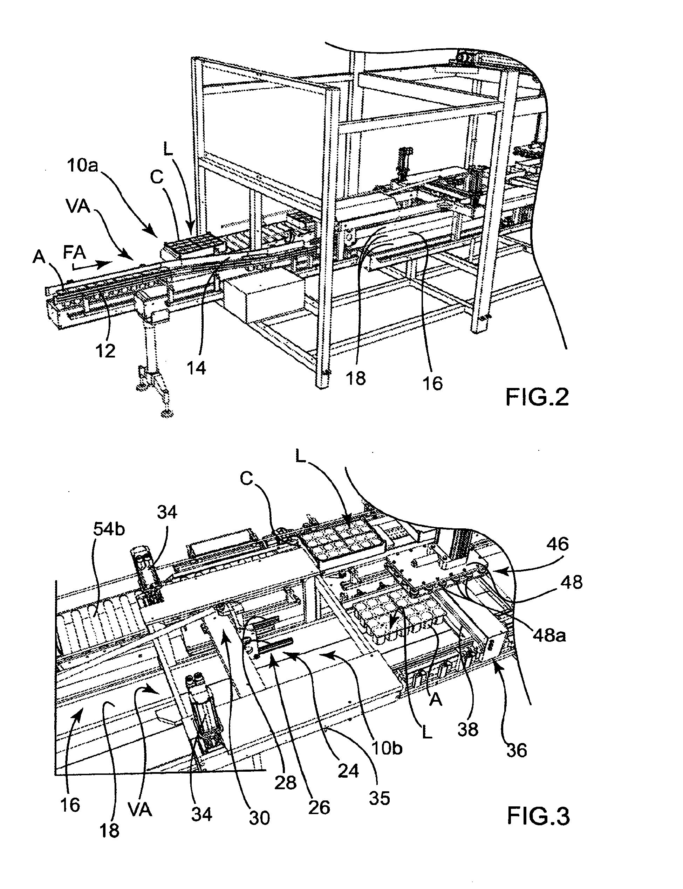

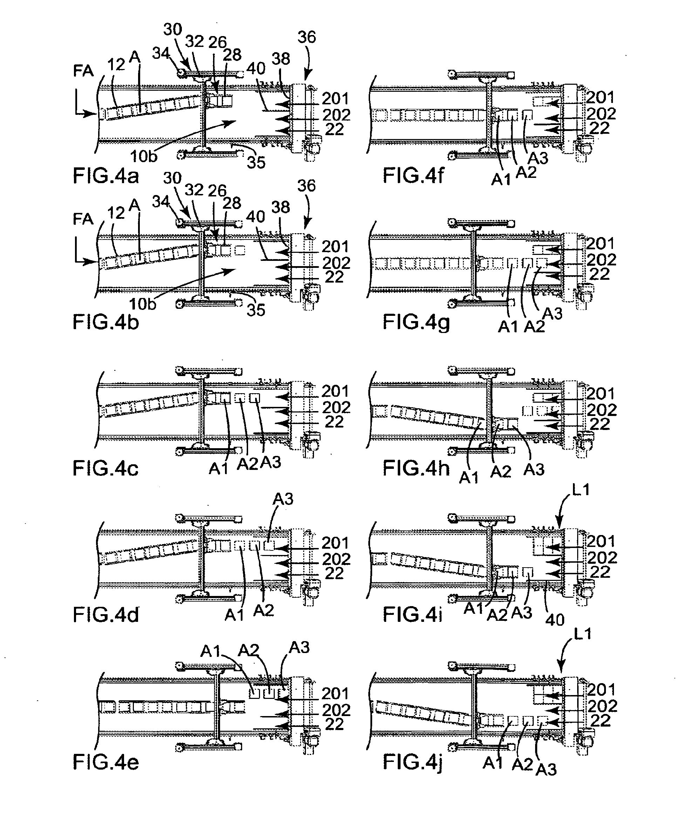

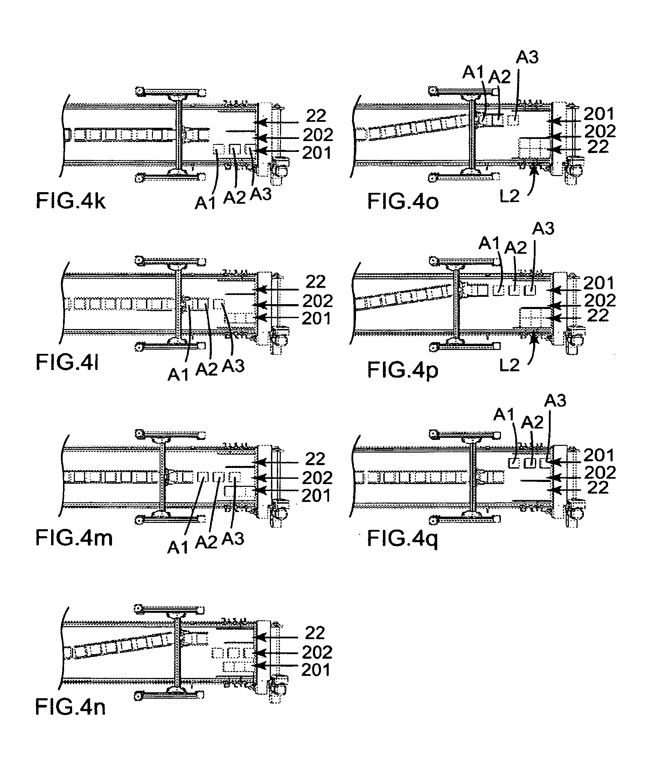

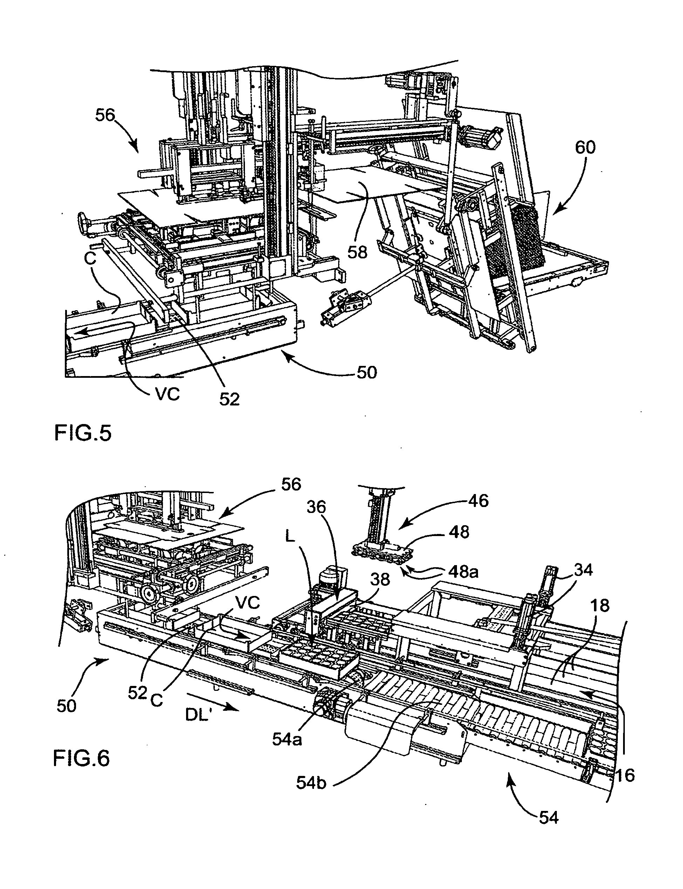

D'autres caractéristiques et avantages de l'invention ressortiront clairement de la description qui en est faite ci-après, à titre indicatif et nullement limitatif, en référence aux dessins annexés, dans lesquels :
▪ La figure 1 est une vue d'ensemble partielle, en perspective, d'un dispositif d'encaissage selon l'invention, sur lequel se trouvent des produits, des réceptacles de conditionnement ainsi que des lots de produits constitués et agencés dans les réceptacles de conditionnement ;
▪ La figure 2 est une vue de détail partielle, en perspective, de la voie d'approvisionnement en produits et des moyens d'entraînement du flux continu d'approvisionnement de produits appartenant au dispositif d'encaissage de la figure 1 ;
▪ La figure 3 est une vue de détail partielle, en perspective, des moyens de déport appartenant au dispositif d'encaissage de la figure 1 et permettant de déporter les produits vers les sous-voies de placement sans retardation vis-à-vis du flux continu d'approvisionnement de produits ;
▪ Les figures 4a à 4q sont des vues de détail partielles, en vue de dessus, des moyens de déport et d'accumulation appartenant au dispositif d'encaissage de la figure 1 lors de la mise en oeuvre des étapes de déport, d'accumulation et d'encaissage de deux lots de produits selon l'invention ;
▪ La figure 5 est une vue de détail partielle, en perspective, des moyens de formation des réceptacles de conditionnement du dispositif d'encaissage de la figure 1 ;
▪ La figure 6 est une vue de détail partielle, en perspective, de la deuxième voie d'approvisionnement en réceptacles de conditionnement appartenant au dispositif d'encaissage de la figure 1.

L'invention se rapporte à l'encaissage, de produits A identiques ou similaires, c'est-à-dire présentant des dimensions relativement proches les uns des autres mais éventuellement certaines distinctions, notamment d'ordre ornemental.

Ces produits A peuvent, selon une réalisation non limitative être agencés en plaquettes comportant chacune une pluralité d'articles A sensiblement de même longueur dans une direction de défilement qualifiée de direction longitudinale D_{L} et de même largeur dans une direction transversale D_{T} perpendiculaire à la direction longitudinale D_{L}.

Par la suite, il ne sera fait mention que des produits A mais il convient de signaler que ce qui est applicable aux produits A l'est également aux plaquettes P de produits A.

Les produits A sont destinés à être disposés en une ou plusieurs rangées R comportant chacune un ou plusieurs produits A afin de former des lots L de produits A. Ces lots L de produits A sont ainsi constitués de m rangées R composées de n produits chacune, m et n étant des entiers supérieurs ou égaux à un.

Selon plusieurs réalisations mentionnées à titre exemplatif et nullement limitatif, les lots L peuvent ainsi être composés de quatre rangées de six produits tel que représentés sur les figures 1, 2, 3 et 6 ou bien de deux rangées de trois produits tel que représenté sur les figures 4a à 4q, etc.

Les produits A sont typiquement des emballages primaires tels que des pots en matière plastique, en carton paraffiné ou analogue destinés à être fermé par des opercules et contenant des produits laitiers frais ou ultra-frais tels que yaourts et assimilés, crèmes dessert, glaces et assimilés, mais également des produits fromagers, des compotes.

Tout cela n'est qu'exemplatif et non limitatif et le terme « produit » signifie par convention un emballage primaire empli de son contenu. Dans une réalisation typique, les produits A ont une forme générale cylindrique ou prismatique ou pseudo cylindrique ou pseudo prismatique ou ovoïde ou analogue avec un axe disposé normalement verticalement. Dans une réalisation typique, un tel produit A présente une longueur longitudinale de l'ordre de quelques centimètres.

Les lots L de produits A sont destinés à être encaissés dans des réceptacles de conditionnement C.

Cela peut notamment être mis en oeuvre et fonctionner lorsque l'on dispose de produits A et de réceptacles de conditionnement C élaborés séparément. En particulier le procédé selon l'invention peut être mis en oeuvre et la machine selon l'invention peut être installée en aval, notamment immédiatement en aval ou quasiment immédiatement en aval, d'une ligne ou d'une unité d'élaboration des articles A (formation du contenu, emplissage et fermeture).

Le dispositif d'encaissage selon l'invention, tel que représenté sur la figure 1, comporte un bâti et des éléments support appropriés (représentés en partie seulement). Ce dispositif s'étend dans un plan sensiblement horizontal.

Le dispositif d'encaissage comporte une première voie d'approvisionnement V_{A} en produits A.

Cette première voie d'approvisionnement V_{A}, plus particulièrement visible sur les figures 1 et 2, s'étend sensiblement à l'horizontale dans la direction longitudinale D_{L} et forme d'abord une zone qualifiée de zone d'approvisionnement 10a.

Le long de cette zone d'approvisionnement 10a, la première voie d'approvisionnement V_{A} présente deux rails de guidage 12 s'étendant sensiblement dans la direction longitudinale D_{L}. En outre, les deux rails de guidage 12 sont sensiblement espacés dans la direction transversale D_{T} d'une largeur légèrement supérieure à la largeur des produits A. De cette façon les produits A sont à même de se déplacer, au sein de la zone d'approvisionnement 10a, selon la direction longitudinale D_{L} mais leur positionnement dans la direction transversale D_{T} est contraint par les deux rails de guidage 12.

Comme représenté sur la figure 1, la zone d'approvisionnement 10a peut éventuellement présenter une zone courbe 14 dans laquelle les rails de guidage 12 présentent une forme courbe de manière à assurer le déplacement plus ou moins accentué des produits A dans la direction transversale D_{T}.

Le dispositif d'encaissage comporte également des moyens d'entraînement 16.

Ces moyens d'entraînement 16, visibles notamment sur les figures 1 et 2, permettent de transporter les produits A le long de la première voie d'approvisionnement V_{A}, dans la direction longitudinale D_{L} qui est également la direction du mouvement d'entraînement des parties et organes d'entraînement formant ces moyens d'entraînement 16, tels que convoyeurs ou moyens convoyeur.

Les convoyeurs ou moyens convoyeur et donc les produits A sont aptes à se mettre en mouvement le long de la direction longitudinale D_{L} dans un sens donné, ce qui permet de définir sur la première voie d'approvisionnement V_{A} un côté amont et un côté aval.

Selon la réalisation de la figure 1, les moyens d'entraînement 16 comportent notamment un ou plusieurs tapis transporteur 18 à bandes disposés en sortie ou à proximité de la sortie d'une ligne ou d'une unité d'élaboration des produits A. Ces tapis transporteur 16 entraînent les produits A le long de première voie d'approvisionnement V_{A} et notamment dans la zone d'approvisionnement 10a depuis le coté amont et jusqu'au coté aval.

Lorsque la zone d'approvisionnement 10a présente une zone courbe 14, les moyens d'entraînement 16 sont composés d'autant de tapis transporteur 16 que nécessaire pour assurer l'entraînement des produits A malgré le déplacement transversal généré par cette zone courbe 14.

Selon la réalisation représentée sur les figures 1, 2, 3 et 6, les moyens d'entraînements 16 comportent ainsi deux tapis transporteurs 18 et sont aptes à entraîner un flux continu d'approvisionnement F_{A} de produits alignés les uns derrières les autres le long de la voie d'approvisionnement V_{A}.

Il convient d'entendre par l'expression « flux continu d'approvisionnement F_{A} » que les produits A agencés sur la première voie d'approvisionnement V_{A} sont entraînés de manière continue par les moyens d'entraînement 16 dans la zone d'approvisionnement 10a.

À l'inverse, cela ne signifie pas forcément que les produits A sont alignés sans discontinué sur la première voie d'approvisionnement V_{A}. Au contraire, selon le chargement des produits A sur la première voie d'approvisionnement V_{A} - depuis par exemple l'unité d'élaboration de produits A - il se peut que surviennent des interruptions momentanées d'alimentation en produits A.

À l'aval de la zone d'approvisionnement 10a, la première voie d'approvisionnement V_{A} forme ensuite une zone de déport 10b.

Cette zone de déport 10b, représentée plus précisément sur la figure 3, contient autant de sous-voies de placement 20 qu'il est nécessaire de constituer de rangées R de produits A pour constituer un lot L.

Ainsi, dans l'hypothèse où un lot est constitué de m rangées R de n produits A, la zone de déport 10b contient m sous-voies de placement 20 distinctes, disposées de façon adjacente les unes par rapport aux autres dans la direction transversale D_{T}.

Ces sous-voies de placement 20 s'étendent selon la direction longitudinale D_{L}.

Selon l'invention, la zone de déport 10b contient également une sous-voie de placement tampon 22 également distincte et adjacente des m sous-voies de placement 20 et s'étendant selon la direction longitudinale D_{L}.

Les sous-voies de placement 20 et la sous-voie de placement tampon 22 sont aptes à recevoir une rangée R de n produits A. Par conséquent, les sous-voies de placement 20 et la sous-voie de placement tampon 22 présentent chacune, dans la direction transversale D_{T}, une largeur au moins égale à la largeur des produits P. Il en découle que la zone de déport 10b présente une largeur totale, dans la direction transversale D_{T}, correspondant au minimum à l'addition de m sous-voies de placement 20 et d'une sous-voie de placement tampon 22, c'est-à-dire une largeur au moins égale à (m + 1) fois la largeur d'un produit A.

Par convention, sont appelées sous-voies de placement 20 les sous-voies qui, au cours d'un cycle d'encaissage, sont amenées à recevoir les produits A constituant un premier lot L.

Par convention également, est appelée sous-voie de placement tampon 22 la sous-voie qui, au cours du cycle d'encaissage précité est amenée à recevoir les produits A destinés à constituer un deuxième lot L réalisé postérieurement au premier lot L précité.

Il convient de signaler que, dans la réalisation qui vient d'être décrite, la zone de déport 10b est mentionnée comme ne présentant qu'une sous-voie de placement tampon 22. Toutefois, selon des réalisation alternative, il serait également possible que la zone de déport 10b contiennent plusieurs sous-voies de placement tampon 22 amenées à recevoir les produits A destinés à former un deuxième lot L.

Pour assurer le déplacement des produits A le long de la zone de déport 10b, le dispositif d'encaissage comporte comme précédemment des convoyeurs ou moyens convoyeurs. Plus précisément, selon une réalisation non limitative le dispositif d'encaissage comporte suffisamment de tapis transporteur 18 pour couvrir la largeur de m sous-voies de placement 20 et de la sous-voie de placement tampon 22.

Comme le montre la réalisation de la figure 3, la zone de déport 10b peut par exemple comporter trois tapis transporteurs 18.

Ces tapis transporteurs 18 permettent comme précédemment d'entraîner les produits A le long de la direction longitudinale D_{L} dans le même sens que précédemment ce qui permet de déplacer les produits A depuis un coté amont et jusqu'à un coté aval de la zone de déport 10b.

Par ailleurs, les m sous-voies de placement 20 sont agencées de sorte que les m rangées R de n produits A sont espacées les uns des autres, dans la direction transversale D_{T}, d'une distance d'espacement prédéterminée.

Cette distance d'espacement peut être grande ou quasiment nulle selon les réalisations.

Mais la réalisation d'une distance d'espacement suffisante entre les rangées R de produits A permet d'éviter de façon mécanique le contact entre ces produits A lorsque qu'ils sont positionnés dans les sous-voies de placement 20 et donc de limiter les risques de positionnement chaotique de desdits produits A les uns par rapport aux autres.

Pour améliorer la précision du positionnement des produits A dans les sous-voies de placement 20 et la sous-voie de placement tampon, la zone de déport 10b peut d'ailleurs comprendre des rails de placement (non représentés) d'une épaisseur correspondant à la distance d'espacement. De cette manière, le guidage, le positionnement transversal et le maintien en position des m successions de n produits le long des m sous-voies de placement 20 est assuré.

Ces rails de guidage peuvent alternativement s'étendre jusqu'aux moyens d'accumulation (décrit ultérieurement) ou bien s'arrêter avant.

Il est aussi possible de se priver de tels rails de guidage, tel que l'illustre la figure 1.

Le dispositif d'encaissage comporte également des moyens de déport 24 des produits A.

Ces moyens de déport 24, notamment représentés sur les figures 2 et 3, sont structurellement liés aux rails de guidage 12 de la première voie d'approvisionnement V_{A} ce qui permet d'assurer le guidage du flux continu d'approvisionnement F_{A} de produits A jusqu'aux moyen de déport 24.

Les moyens de déport 24 comprennent un module de préhension 26 apte à enserrer une succession de n produits, où n correspond au nombre de produits A formant une rangée R de lot L.

Selon la réalisation de la figure 3, le module de préhension 26 comportent deux baguettes de préhension 28 d'une longueur environ égale à la longueur totale d'une succession de n produits A dans la direction longitudinale D_{L}. D'autre part, ces baguettes de préhension 28 sont espacées l'une de l'autre d'une distance légèrement supérieure à la largeur des produits A et sont aptes à se rapprochées l'une de l'autre dans la direction transversale D_{T} de manière à enserrer la succession de n produits A.

Les moyens de déport 24 comportent également un module de motorisation 30 présentant un portique de déplacement 32 bidirectionnel et deux moteurs 34.

Le portique de déplacement 32 supporte structurellement et fonctionnellement le module de préhension 26 et assure, sous l'impulsion des moteurs 34, le déplacement simultané ou consécutif de ce module de préhension 26 dans la direction longitudinale D_{L}, d'une part, et dans la direction transversale D_{T}, d'autre part.

De cette manière, le module de préhension 26 est apte, après avoir enserré la succession de n produits A, à se déplacer simultanément ou consécutivement :
▪ dans la direction longitudinale D_{L} de manière à ce que le module de préhension 26 ne perde pas de vitesse par rapport au flux continu d'approvisionnement F_{A} de produit A ; et
▪ dans la direction transversale D_{T} de manière à positionner cette succession de produits A en regard d'une sous-voie de placement 20 ou d'une sous-voie de placement tampon 22.

De cette façon, les moyens de déports 24 sont aptes à déplacer cette succession de produits A non seulement dans la direction transversale D_{T} mais aussi dans la direction longitudinale D_{L} de manière à combler le retard généré par le déport transversal et placer ladite succession de produits A dans une position analogue à celle qu'elle occupait, avant déport, vis-à-vis du flux continu d'approvisionnement F_{A}.

Ainsi, les moyens de déport 24 sont aptes à déporter par m déplacements dans des directions transversales sans retard par rapport au flux continu d'approvisionnement F_{A}, m successions de n produits A disposés selon m rangées R respectivement positionnées le long de m sous-voies de placement 20.

Ce déport sans retard peut être réalisé alternativement par glissement des produits A sur les tapis transporteurs 18 ou bien par soulèvement des produits A vis-à-vis de ces tapis transporteurs 18.

Dans les cas où la zone de déport 10b est dépourvue de rail de guidage, les moyens de déport 24 assurent un positionnement suffisamment précis des rangées R de produits A le long des sous-voies de placement 20 pour éviter les risques de contact susceptibles de générer des positionnement chaotiques des produits A entre eux.

Il convient de noter, de manière générale, que l'exemple de réalisation des moyens de déport 24 illustré par la figure 3 n'est présenté qu'à titre exemplatif et nullement limitatif. Ainsi, selon la forme, l'aspect et/ou l'adhérence des produits A, la réalisation du module de préhension 26 pourrait être réalisé de façon différente.

Il convient de noter également que, selon une réalisation, les moyens de déport 24 comprennent des détecteurs de passage 35 aptes à identifier le passage de produits A au-delà d'une position prédéterminée le long première voie d'approvisionnement V_{A}.

Ainsi, ces détecteurs de passage 35 sont à même de déterminer le nombre de produits A - correspondant à une succession de produits A susceptible de former une rangée R de n produits - ayant traversé et dépassé la position prédéterminée.

Le module de préhension 26 est asservi aux détecteurs de passage 35 et peut donc se mettre en mouvement automatiquement lorsque le dernier produit A d'une succession de n produits A sort de la zone de déport 10b de manière à déclencher immédiatement ou avec un retard prédéterminé l'étape de déport sans retard d'une nouvelle succession de n produits A.

Le dispositif d'encaissage comporte également des moyens d'accumulation 36.

Ces moyens d'accumulation 36 sont aptes à accumuler et rassembler, dans la direction longitudinale D_{L}, les n produits de chaque rangée R le long de sa sous-voie de placement 20 de manière à former un premier lot L de m x n produits A.

Selon la réalisation représentée sur la figure 3, ces moyens d'accumulation 36 sont composés d'une paroi d'arrêt 38 positionnée dans la direction transversale et permettant de stopper totalement la progression des produits A par rapport au flux continu d'approvisionnement F_{A}.

Ainsi, lorsqu'une succession de n produits A est entraînée dans la direction longitudinale D_{L} le long d'une une sous-voie de placement 20, la paroi d'arrêt 38 est dans un premier temps apte à freiner totalement la progression du premier produit A positionné le plus en amont. Puis, lorsque ce premier produit A est rejoint par un deuxième produit A, la progression de ce dernier est également stoppé par la paroi d'arrêt 38 via le premier produit A. Ce phénomène se répète ensuite pour l'ensemble des n produits A composant une rangée R.

Il convient de noter que, selon une variante, les moyens d'accumulation 36 peuvent être réalisés différemment et notamment comprendre une paroi d'arrêt (non représentée) en mouvement dans la direction longitudinale D_{L} à une vitesse de déplacement inférieure à celle des tapis transporteurs 18.

De cette façon, ces moyens d'accumulation 36 sont aptes à ralentir, sans la stopper, la progression des n produits le long des m sous-voies de placement 20 de manière à assurer leur accumulation et leur rassemblement dans la direction longitudinale D_{L}.

Selon une réalisation (non représentée sur la figure 3), les moyens d'accumulation 36 comprennent également un bras tacleur 40 apte à se déplacer selon la direction transversale D_{T} pour regrouper dans cette direction transversale D_{T} les m rangées R de n produits A.

Ainsi, ces m rangées R de n produits A peuvent être placées attenantes les unes aux autres dans la direction transversale D_{T} juste avant leur encaissage dans les réceptacles de conditionnement C, ce qui facilite cette opération.

Selon une réalisation, le bras tacleur 40 est systématiquement positionné entre la sous-voie de placement tampon 22 et la sous-voie de placement 20 qui lui est adjacente de manière à ce que les produits A déportés vers la sous-voies de placement tampon 22 ne constituent pas une gêne au déplacement du bras tacleur 40 dans la direction transversale D_{T}.

D'autre part, selon une réalisation exemplative et nullement limitative, le bras tacleur 40 est physiquement porté par la paroi d'arrêt 38, orienté à la perpendiculaire de cette dernière et entraîné par un moteur 34 via une courroie de transmission. Toutefois, selon une variante ce bras tacleur 40 pourrait également être structurellement et fonctionnellement indépendant de la paroi d'arrêt 38 en étant, par exemple, porté par le bâti du dispositif d'encaissage.

Les figures 4a à 4q illustrent en vue de détail, partielle et de dessus le fonctionnement du dispositif d'encaissage de la figure 1 dans le cadre de la constitution et de l'encaissage d'un premier lot L₁ puis d'un second lot L₂ de produits A constitués de deux rangées R₂ de trois produits A₂, A₃ chacune.

Comme le montre la figure 4a, les produits A sont d'abord entraînés par les moyens d'entraînement 16 le long de la première voie d'approvisionnement V_{A} dans la direction longitudinale et forment un flux continu d'approvisionnement F_{A} de produits A alignés.

Ces produits A sont ainsi entraînés jusqu'au moyens de déport 24 eux-mêmes placés dans une position prédéterminée le long d'une première sous-voies de placement 20₁.

Il ressort des figures 4b, à 4f qu'une première succession de trois produits A₁, A₂, A₃ poursuit sont déplacement le long de cette première sous-voie de placement 20₁ sous l'action des moyens d'entraînement 16 et rejoint les moyens d'accumulation 36 et notamment la paroi d'arrêt 38. De cette façon, la première succession de produit A₁, A₂, A₃ forme une première rangée R₁ de trois produits A₁, A₂, A₃ positionnés le long de la première sous-voie de placement 20₁.

Plus exactement, les trois produits A₁, A₂, A₃ de la première rangée R₁ sont accumulés et rassemblés dans la direction longitudinale D_{L}, tel que représenté sur la figure 4f.

Dés que les détecteurs de passage 35 détectent le passage du troisième produits A₃ à l'extérieur du module de préhension 26, un signal d'instruction est transmis vers les moyens de déport 24 en vue d'initier l'étape de déport d'une deuxième succession de produis A₁, A₂, A₃ le long d'une seconde sous-voie de placement 20₂.

Pour ce faire, le module de préhension 26 enserre la deuxième succession de produits A₁, A₂, A₃ et grâce au module de motorisation 30 entame, d'une part, un déplacement dans la direction transversale D_{T} de manière à faire face à la deuxième sous-voie de placement 20₂ et, d'autre part, un déplacement dans la direction longitudinale D_{L} de manière à ne pas prendre de retard vis-à-vis du flux continu d'approvisionnement F_{A}.

C'est ce que représentent les figures 4d et 4e.

Les moyens de déport 24 permettent ainsi de déporter la deuxième succession de produits A₁, A₂, A₃ par un déplacement dans la direction transversale DT sans retardation vis-à-vis du flux continu d'approvisionnement F_{A}, le long de la deuxième sous-voie de placement 20₂.

Il ressort des figures 4f, à 4i que la deuxième succession de 3 produits A₁, A₂, A₃ poursuit ensuite son déplacement dans la direction longitudinale D_{L} sous l'action des moyens d'entraînement 16 et rejoint les moyens d'accumulation 36 et notamment la paroi d'arrêt 38. De cette façon, la deuxième succession de produits A₁, A₂, A₃ forme une deuxième rangée R₂ de trois produits A₁, A₂, A₃ accumulés et rassemblés le long de la deuxième sous-voies de placement 20₂.

Cette deuxième rangée R₂ est adjacente à la première rangée R₁.

Il convient de noter que l'opération de déport de la deuxième succession de produits A₁, A₂, A₃ est initiée avant que la phase d'accumulation de la première rangée R1 de produits A₁, A₂, A₃ ne soit totalement achevée.

Selon la réalisation représentée notamment sur les figures 4h et 4j, les moyens d'accumulation 36 comprennent un bras tacleur 40 qui assure le regroupement de la première rangée R1 et de la deuxième rangée R₂ de produits A₁, A₂, A₃ dans la direction transversale D_{T}.

La première rangée R1 de produits A₁. A₂, A₃ et la deuxième rangée R₂ de produits A₁, A₂, A₃ forment alors un premier lot L₁ de produits A₁, A₂, A₃ regroupés dans les directions longitudinales D_{L} et transversales D_{T}.

Ce premier lot L₁ est prêt à être encaissé dans des réceptacles de conditionnement C tel que le symbolise - sans que soient représentés les moyens d'encaissage (décrits ultérieurement) - la succession des figures 4j et 4h.

À l'issue de cette étape d'encaissage du premier lot L₁ dans un réceptacle de conditionnement C, le premier cycle d'encaissage s'achève.

Selon l'invention et tel que représenté sur les figures 4g à 4j, le procédé d'encaissage consiste à initier l'étape de déport d'une troisième succession de trois produits A₁, A₂, A₃ destinés à former la première rangée R₁ d'un deuxième lot L₂ durant la phase d'accumulation de la deuxième rangée R₂ constituant le premier lot L₁.

Ainsi, comme le montre les figures 4g et 4h, dés que les détecteurs de passage 35 détectent le passage du troisième produits A₃ de la deuxième succession de produits A₁, A₂, A₃ à l'extérieur du module de préhension 26, un signal d'instruction est transmis vers les moyens de déport 24 en vue d'initier l'étape de déport de la troisième succession de produis A₁, A₂, A₃ le long d'une sous-voie de placement tampon 22.

De la même façon que précédemment, le module de préhension 26 enserre la troisième succession de produits A₁, A₂, A₃ et grâce au module de motorisation 30 entame, d'une part, un déplacement dans la direction transversale D_{T} de manière à faire face à la sous-voie de placement tampon 22 et, d'autre part, un déplacement dans la direction longitudinale D_{L} de manière à ne pas prendre de retard vis-à-vis du flux continu d'approvisionnement F_{A}.

C'est ce que représentent les figures 4g et 4h.

Grâce à l'utilisation de cette sous-voie de placement tampon 22, il est possible de maintenir le flux continu d'approvisionnement F_{A} de produits A tout en disposant d'un intervalle de temps suffisant pour permettre l'encaissage du premier lot L₁ par les moyens d'encaissage (décrit ultérieurement). En effet, la troisième succession de produits A₁, A₂, A₃ poursuit son déplacement dans la direction longitudinale D_{L} sous l'action des moyens d'entraînement 16 et rejoint la paroi d'arrêt 38. Mais puisque la sous-voie de placement tampon 22 est distincte et adjacente de la deuxième sous-voie de placement 20₂, il n'y a pas de risque que la troisième succession de produits A₁, A₂, A₃ rencontre et perturbe le positionnement de la première rangée R1 et de la deuxième rangée R2 de produits A1, A2, A3 formant le premier lot L₁.

C'est d'ailleurs ce qui ressort des figures 4i et 4j.

Tandis que le premier lot L₁ est encaissé la troisième succession de trois produits A₁, A₂, A₃ poursuit son déplacement dans la direction longitudinale D_{L} sous l'action des moyens d'entraînement 16 et les trois produits A₁, A₂, A₃ correspondant rejoignent la paroi d'arrêt 38.

De cette façon, la troisième succession de produits A₁, A₂, A₃ forme une première rangée R₁ de trois produits A₁, A₂, A₃ accumulés et rassemblés le long de la sous-voie de placement tampon 22 en vue de constituer un deuxième lot L₂.

À cet égard, la sous-voies de placement tampon 22 considéré comme tel lors du cycle d'encaissage du premier lot L₁ formé désormais une première sous-voie de placement 20₁ recevant les trois produits A₁, A₂, A₃ destinés à former la première rangée R1 du second lot L₂.

Dés que les détecteurs de passage 35 détectent le passage du troisième produits A₃ à l'extérieur du module de préhension 26, un signal d'instruction est transmis vers les moyens de déport 24 en vue d'initier l'étape de déport d'une quatrième succession de produis A₁, A₂, A₃ le long de la deuxième sous-voie de placement 20₂.

Pour ce faire, le module de préhension 26 enserre la deuxième succession de produits A₁, A₂, A₃ et grâce au module de motorisation 30 entame, d'une part, un déplacement dans la direction transversale D_{T} de manière à faire face à la deuxième sous-voie de placement 20₂ et, d'autre part, un déplacement dans la direction longitudinale D_{L} de manière à ne pas prendre de retard vis-à-vis du flux continu d'approvisionnement F_{A}.

C'est ce que représentent les figures 4j et 4k.

Les moyens de déport 24 permettent ainsi de déporter la quatrième succession de produits A₁, A₂, A₃ par un déplacement dans la direction transversale DT sans retardation vis-à-vis du flux continu d'approvisionnement F_{A}, le long de la deuxième sous-voie de placement 20₂.

Il ressort des figures 4k, à 4o que la quatrième succession de trois produits A₁, A₂, A₃ poursuit ensuite son déplacement dans la direction longitudinale D_{L} sous l'action des moyens d'entraînement 16 et rejoint les moyens d'accumulation 36 et notamment la paroi d'arrêt 38. De cette façon, la quatrième succession de produits A₁, A₂, A₃ forme une deuxième rangée R₂ de trois produits A₁, A₂, A₃ accumulés et rassemblés le long de la deuxième sous-voies de placement 20₂.

Cette deuxième rangée R₂ est adjacente à la première rangée R₁

Il convient de noter que l'opération de déport de la deuxième succession de produits A₁, A₂, A₃ est initiée avant que la phase d'accumulation de la première rangée R1 de produits A₁, A₂, A₃ ne soit totalement achevée.

Selon la réalisation représentée notamment sur les figures 4n et 4o, le bras tacleur 40 assure le regroupement de la première rangée R1 et de la deuxième rangée R₂ de produits A₁, A₂, A₃ dans la direction transversale D_{T}.

La première rangée R1 de produits A₁, A₂, A₃ et la deuxième rangée R₂ de produits A₁, A₂, A₃ forment alors le deuxième lot L₂ de produits A₁, A₂, A₃ regroupés dans les directions longitudinales D_{L} et transversales D_{T}.

Ce deuxième lot L₂ est prêt à être encaissé dans des réceptacles de conditionnement C tel que le symbolise - sans que soient représentés les moyens d'encaissage (décrits ultérieurement) - la succession des figures 4p et 4q.

À l'issue de cette étape d'encaissage du deuxième lot dans un réceptacle de conditionnement C, le deuxième cycle d'encaissage s'achève.

De la même façon que précédemment et tel que représenté sur les figures 4m à 4n, le procédé d'encaissage selon l'invention consiste à initier l'étape de déport d'une cinquième succession de trois produits A₁, A₂, A₃ destinés à former la première rangée R₁ d'un troisième lot L₃ durant la phase d'accumulation de la deuxième rangée R₂ constituant le premier lot L₂.

Ainsi, comme le montre les figures 4m et 4n, dés que les détecteurs de passage 35 détectent le passage du troisième produits A₃ de la quatrième succession de produits A₁, A₂, A₃ à l'extérieur du module de préhension 26, un signal d'instruction est transmis vers les moyens de déport 24 en vue d'initier l'étape de déport de la cinquième succession de produis A₁, A₂, A₃ le long d'une sous-voie de placement tampon 22.

Cette sous-voie de placement tampon 22 correspond alors à ce qui était considéré comme la première sous-voie de placement 20₁ lors du cycle d'encaissage du premier lot L₁.

De la même façon que précédemment, le module de préhension 26 enserre la cinquième succession de produits A₁, A₂, A₃ et grâce au module de motorisation 30 entame, d'une part, un déplacement dans la direction transversale D_{T} de manière à faire face à la sous-voie de placement tampon 22 et, d'autre part, un déplacement dans la direction longitudinale D_{L} de manière à ne pas prendre de retard vis-à-vis du flux continu d'approvisionnement F_{A}.

C'est ce que représentent les figures 4m et 4n.

Grâce à l'utilisation de la sous-voie de placement tampon 22, il est possible de maintenir le flux continu d'approvisionnement F_{A} de produits A tout en disposant d'un intervalle de temps suffisant pour permettre l'encaissage du deuxième lot L₂ par les moyens d'encaissage (décrit ultérieurement). En effet, la cinquième succession de produits A₁, A₂, A₃ poursuit son déplacement dans la direction longitudinale D_{L} sous l'action des moyens d'entraînement 16 et rejoint la paroi d'arrêt 38. Mais puisque la sous-voie de placement tampon 22 est distincte et adjacente de la deuxième sous-voie de placement 20₂, il n'y a pas de risque que la troisième succession de produits A₁, A₂, A₃ rencontre et perturbe le positionnement de la première rangée R1 et de la deuxième rangée R2 de produits A1, A2, A3 formant le premier lot L₁.

C'est d'ailleurs ce qui ressort des figures 4o et 4p.

Tandis que le premier lot L₁ est encaissé la cinquième succession de trois produits A₁, A₂, A₃ poursuit son déplacement dans la direction longitudinale D_{L} sous l'action des moyens d'entraînement 16 et les trois produits A₁, A₂, A₃ correspondant rejoignent la paroi d'arrêt 38.

De cette façon, la cinquième succession de produits A₁, A₂, A₃ forme une première rangée R₁ de trois produits A₁, A₂, A₃ accumulés et rassemblés le long de la sous-voie de placement tampon 22 en vue de constituer un troisième lot L₃.

À cet égard, la sous-voies de placement tampon 22 considéré comme tel lors du cycle d'encaissage du deuxième lot L₂ forme désormais une première sous-voie de placement 20₁ recevant les trois produits A₁, A₂, A₃ destinés à former la première rangée R1 du troisième lot L₃.

Ces étapes s'enchaînent ensuite, de façon cyclique, de sorte à constituer autant de lot L de produits A que nécessaire.

Comme évoqué, le dispositif comporte des moyens d'encaissage 46 des lots suremballés L_{S}.

Ces moyens de d'encaissage 46 des lots suremballés L_{S}, représentés notamment sur la figure 6 sont capables de décharger, de manière séquentielle, les lots L de produits A accumulés et rassemblés par les moyen d'accumulation 36 sur la première voie d'approvisionnement V_{A} vers des réceptacles de conditionnement C adapté pour le conditionnement et la manutention des lots L de produits A.

Selon une réalisation, les moyens d'encaissage 46 comportent une unité de préhension 48 composée de m rangées de n têtes de préhension 48a de manière à permettre la manipulation et le déplacement des m x n produits A formant un lot L.

Toutefois, cette manipulation peut, selon les réalisations, également être opérée en plusieurs temps.

Les têtes de préhension 24 sont aptes à se déplacer, d'une part, dans la direction transversale D_{T} perpendiculaire à la direction longitudinale D_{L} et, d'autre part, dans la direction verticale afin d'extraire, par le haut, les produits A de la première voie d'approvisionnement V_{A} et de les transporter, dans la direction transversale D_{T}, jusqu'aux réceptacles de conditionnement C.

Comme précédemment, il convient de noter que ces têtes de préhension 24 peuvent être asservies sur des détecteurs de passage 35 afin d'engager la manipulation et le déplacement des produits A lorsque ces derniers accumulés et rassemblé dans la direction longitudinale et éventuellement dans la direction transversale D_{T}.

Selon la réalisation dans laquelle les moyens d'accumulation 36 sont dépourvus de bras tacleur 40, il possible d'utiliser les moyens d'encaissage 46 pour opérer, avant encaissage, le regroupement dans la direction transversale D_{T} des produits A formant un lot L.

Pour ce faire, les m rangées de n têtes de préhension 46a appartenant aux moyens d'encaissage 46 sont aptes à se rapprocher les unes des autres dans la direction transversale D_{T} de manière assurer l'encaissage des m rangées de n produits à l'intérieur d'un réceptacle de conditionnement.

L'opération de regroupement des produits A dans la direction transversale D_{T} a, de ce fait, moins d'influence sur la cadence du dispositif d'encaissage puisque cette opération de regroupement des produits A dans la direction transversale DT peut s'opérer lors de la manipulation du lot L vers les réceptacles de conditionnement, en temps masqué.

Les moyens d'encaissage 46 sont associés à des moyens d'alimentation 50 en réceptacles de conditionnement C.

Ces moyens d'alimentation 50, représentés sur les figures 5 et 6, comportent des convoyeurs ou moyens convoyeur permettant de transporter les réceptacles de conditionnement C selon un flux d'approvisionnement en réceptacles de conditionnement C supportés par une deuxième voie d'approvisionnement V_{C}.

Ce flux d'approvisionnement en réceptacles de conditionnement C est orienté selon une direction de défilement également qualifiée de « direction longitudinale » D_{L}' et qui se trouve, de préférence, parallèle à la direction longitudinale D_{L} du flux continu d'approvisionnement F_{A} de produits A.

Les moyens d'alimentation 50 et donc les réceptacles de conditionnement C sont aptes à se mettre en mouvement le long de la direction longitudinale D_{L}' dans un sens donné, opposé au sens de déplacement des produits A selon le flux continu d'approvisionnement F_{A} en produits A.

À titre d'exemple, les moyens d'alimentation 50 comprennent notamment un tapis transporteur 52 à bandes capable d'entraîner les réceptacles de conditionnement C le long de la direction longitudinale D_{L}' dans le sens opposé au sens de déplacement des produits A selon le flux continu d'approvisionnement F_{A} en produits A.

Les moyens d'alimentation 50 en réceptacles de conditionnement C sont synchronisés vis-à-vis des moyens d'encaissage 46 de manière à permettre l'accélération, le ralentissement ou l'arrêt des réceptacles de conditionnement C le long du flux d'approvisionnement en réceptacles de conditionnement C. De cette façon, il est possible d'assurer un positionnement précis des réceptacles de conditionnement C vis-à-vis des moyens d'encaissage 46 afin d'opérer le déchargement des lots L de produits A dans les réceptacles de conditionnement C.

Les moyens d'alimentation 50 comportent, en outre, des capteurs de positionnement (non représentés) permettant d'identifier la position des réceptacles de conditionnement C le long du flux d'approvisionnement et, notamment, de déterminer lorsque ces réceptacles de conditionnement C sont au bon emplacement pour réaliser le déchargement des lots L de produits A. Le tapis transporteur 52 qui est asservi à ses capteurs de positionnement est alors stoppé afin de réaliser le déchargement des lots L à l'intérieur des réceptacles de conditionnement C.

Le dispositif comporte des moyens d'évacuation 54 des réceptacles de conditionnement C.

Ces moyens d'évacuation 54 des réceptacles de conditionnement C comprennent, par exemple, un tapis transporteur à bandes 54a disposé en sortie ou à proximité des moyens d'alimentation 50 en réceptacles de conditionnement C de manière à mettre les réceptacles de conditionnement C emplis de lots L de produits A à distance des moyens d'encaissage 46 desdits lots L de produits A.

Ce tapis transporteur éventuellement associé à un convoyeur à rouleaux 54b entraîne les réceptacles de conditionnement C emplis de lot L le long d'une direction de sortie qui peut être, par exemple, transversale à la direction longitudinale D_{L}'.

De cette façon, les moyens d'évacuation 54 des réceptacles de conditionnement C permettent d'entraîner les réceptacles de conditionnement C emplies de lots L de produits A vers un poste de manutention, par exemple.

Selon une réalisation, le dispositif comporte des moyens de formations 56 des réceptacles de conditionnement C.

Ces moyens de formation 56 sont positionnés en amont de la deuxième voie d'approvisionnement V_{C} et assure la mise en forme des réceptacles de conditionnement C à partir de feuillets 58 en carton ou matériau analogue.

Plus précisément, les moyens de formations 56 réceptionne, un par un, les feuillets 58 en provenant d'un magasin 60 dans lequel les feuillets 58 sont à plat, empilés et situés en regard de la deuxième voie d'approvisionnement V_{C}.

Dans les magasins 60, les feuillets 58 sont empilés, inclinés par rapport à la verticale et portés par les organes support vers la sortie du magasin 34. Ainsi lorsqu'un premier feuillet 58 à utiliser est extraite du magasin 60, le feuillet 58 suivants - qui étaient précédemment empilé sur le premier feuillet - vient prendre position contre les organes support du magasin 60, prêt à être extrait à son tour.

Les feuillets 58 sont ainsi distribués vers les moyens de formation 56 qui réalise la mise en forme de des réceptacles de conditionnement C par pliage et collage des feuillets 58, en amont de la deuxième voie d'approvisionnement V_{C}.

Le dispositif d'encaissage gère ainsi, au mieux, l'approvisionnement de la deuxième voie d'approvisionnement V_{C} en réceptacles de conditionnement C.

## Revendications

1. Procédé d'encaissage destiné à réaliser à partir d'un flux continu d'approvisionnement (FA) de produits (A) analogues un encaissage séquentiel de lots (L) de produits (A) à l'intérieur de réceptacles de conditionnement (C), les lots (L) étant constitués de m rangées (R) de n produits (A) chacun, m et n étant des entiers supérieurs ou égaux à un, m x n étant strictement supérieur à un, le procédé d'encaissage comportant une succession d'étapes consistant à :
_entraîner le long d'une première voie d'approvisionnement (VA) s'étendant selon une direction longitudinale (DL), un flux continu d'approvisionnement (FA) de produits (A) alignés et ;
_déporter par m déplacements dans des directions transversales (DT) sans retard par rapport au flux continu d'approvisionnement (FA), m successions de n produits (A) selon m rangées (R) respectivement positionnées le long de m sous-voies de placement (20) distinctes, disposées de façon adjacente sur la première voie d'approvisionnement (VA) ;
_accumuler et rassembler dans la direction longitudinale (DL) les n produits (A) de chaque rangée (R) le long de m sous-voies de placement (20) de manière à former un premier lot (L) de m x n produits (A);
_encaisser de façon séquentielle lesdites m rangées (R) de n produits (A) formant le premier lot (L) à l'intérieur d'un premier réceptacle de conditionnement (C) ;
**caractérisé en ce que** le procédé d'encaissage consiste à :
_initier l'étape de déport d'une première succession de n produits (A) destinée à former une première rangée (R) d'un deuxième lot (L) durant la phase d'accumulation de l'une des rangées (R) de n produits (A) constituant le premier lot (L) ;
o cette première succession de n produits (A) destinés à former une première rangée (R) d'un deuxième lot (L) étant déportée dans un déplacement transversal (DT) sans retard par rapport au flux continu d'approvisionnement (FA), le long d'une sous-voie de placement tampon (22) distincte et adjacente des m sous-voies de placement (20) sur lesquelles ont été constituées les m rangées (R) de n produits (A) formant le premier lot (L) ;
o de manière à autoriser l'accumulation et le rassemblement de produits (A) formant le premier lot (L) sans interrompre ou freiner le flux continu d'approvisionnement (FA) de produits (A) ; et
_initier l'étape d'encaissage du premier lot (L) sans délai substantiel après l'accumulation et le rassemblement du premier lot (L), de manière à autoriser l'encaissage sans interrompre ou freiner le flux continu d'approvisionnement (FA) de produits (A).

2. Procédé d'encaissage selon la revendication 1, dans lequel l'étape de déport des m successions de n produits (A) consiste à positionner les m rangées (R) de n produits (A) le long des m sous-voies de placement (20) de sorte que les m rangées (R) de n produits (A) sont espacées les unes des autres d'une distance d'espacement prédéterminée dans la direction transversale (DT).

3. Procédé d'encaissage selon la revendication 2, dans lequel des rails de placement d'une épaisseur correspondant à la distance d'espacement sont agencés de sorte à assurer le guidage, le positionnement transversal et le maintien en position des m successions de n produits (A) le long des m sous-voies de placement (20).

4. Procédé d'encaissage selon la revendication 2 ou 3, dans lequel l'étape d'encaissage est opérée par des moyens d'encaissage (46) comprenant m rangées (R) de n têtes de préhension (48a), les m rangées (R) de n têtes de préhension (48a) se rapprochant les unes des autres dans la direction transversale (DT) lors de l'étape d'encaissage des m rangées (R) de n produits (A) à l'intérieur d'un réceptacle de conditionnement (C).

5. Procédé d'encaissage selon la revendication 2, comprenant une étape de regroupement s'opérant à l'issue de l'étape d'accumulation des m rangées (R) de n produits (A) et consistant à regrouper dans la direction transversale (DT) les m rangées (R) de n produits (A) de manière à rendre ces m rangées (R) attenantes les unes aux autres dans cette direction transversale (DT) ;
et optionnellement dans lequel l'étape de regroupement est réalisée par l'intermédiaire d'un bras tacleur (40) positionné entre la sous-voie de placement tampon (22) et la sous-voie de placement (20) adjacente à cette sous-voie de placement tampon (22), le bras tacleur (40) se déplaçant selon la direction transversale (DT) pour regrouper dans la direction transversale (DT) les m rangées (R) de n produits (A) de manière à rendre ces m rangées (R) attenantes les unes aux autres dans cette direction transversale (DT).

6. Procédé d'encaissage selon l'une quelconque des revendications 1 à 5, comprenant en outre l'une des caractéristiques suivantes :
- l'étape d'accumulation et de rassemblement des n produits (A) de chaque rangée (R) est réalisée par l'intermédiaire d'une paroi d'arrêt (38) stoppant la progression des n produits (A) le long des m sous-voies de placement (20) ;
- l'étape d'accumulation et de rassemblement des n produits (A) de chaque rangée (R) est réalisée par l'intermédiaire d'une paroi d'arrêt ralentissant sans la stopper la progression des n produits (A) le long des m sous-voies de placement (20).

7. Procédé d'encaissage selon l'une quelconque des revendications 1 à 6, dans lequel les réceptacles de conditionnement (C) sont mis en forme puis transportés le long d'une deuxième voie d'approvisionnement (VC) positionnée à proximité des sous-voies de placement (20) et s'étendant selon une direction sensiblement longitudinal (DL) ;
le procédé d'encaissage comprenant eoptionnellement l'une et/ou l'autre des caractéristiques suivantes :
- les réceptacles de conditionnement (C) sont déplacés selon un sens de déplacement opposé au sens de déplacement des m rangées (R) de n produits (A) accumulés le long des m sous-voies de placement (20) ;
- les réceptacles de conditionnement (C) sont formés par pliage et collage d'un feuillet (58) en amont de la deuxième voie d'approvisionnement (VC).

8. Dispositif d'encaissage destiné à réaliser à un procédé d'encaissage séquentiel de lots (L) de produits (A) à l'intérieur de réceptacles de conditionnement (C) selon l'une des revendications 1 à 7, les lots (L) étant constitués de m rangées (R) de n produits (A) chacun, m et n étant des entiers supérieurs ou égaux à un, m x n étant strictement supérieur à un, le dispositif d'encaissage comportant :
_une première voie d'approvisionnement (VA) s'étendant selon une direction longitudinale 10 (DL) ;
_des moyens d'entraînement (16) aptes à entraîner un flux continu d'approvisionnement (FA) de produits (A) alignés le long de la première voie d'approvisionnement (VA) ;
_des moyens de déport (24) aptes à déporter, par m déplacements dans des directions transversales (DT) sans retard par rapport au flux continu d'approvisionnement (FA), m succession de n produits (A) selon m rangées (R) respectivement positionnées le long de m sous-voies de placement (20) distinctes disposées de façon adjacente sur la première voie d'approvisionnement (VA) ;
_des moyens d'accumulation (36) aptes à accumuler et rassembler dans la direction longitudinale (DL) les n produits (A) de chaque rangée (R) le long de sa sous-voie de placement (20) de manière à former un premier lot (L) de m x n produits (A) ;
_des moyens d'encaissage (46) apte à encaisser de façon séquentielle lesdites m rangées (R) de n produits (A) formant le premier lot (L) à l'intérieur d'un premier réceptacle de conditionnement (C) ;
caractérisé en que
_les moyens de déport (24) sont aptes à déporter une première succession de n produits (A) destinés à former une première rangée (R) d'un deuxième lot (L), dans un déplacement transversal (DT) sans retard par rapport au flux continu d'approvisionnement (FA), le long d'une sous-voie de placement tampon (22) distincte et adjacente des m sous-voies de placement (20) sur lesquelles peuvent être constituées les m rangées (R) de n produits (A) formant le premier lot (L), de manière à autoriser l'accumulation et le rassemblement de produits (A) formant le premier lot (L) sans interrompre ou freiner le flux continu d'approvisionnement (FA) de produits (A) ; et
_les moyens d'encaissage (46) sont agencés de sorte à réaliser l'encaissage du premier lot (L) sans délai substantiel après l'accumulation et le rassemblement du premier lot (L), de manière à autoriser l'encaissage sans interrompre ou freiner le flux continu d'approvisionnement (FA).

9. Dispositif d'encaissage selon la revendication 8, dans lequel les m sous-voies de placement (20) sont agencées de sorte que les m rangées (R) de n produits (A) sont espacées les unes des autres d'une distance d'espacement prédéterminée dans la direction transversale (DT).

10. Dispositif d'encaissage selon la revendication 9, comportant des rails de placement d'une épaisseur correspondant à la distance d'espacement de sorte à assurer le guidage, le positionnement transversal et le maintien en position des m successions de n produits (A) le long des m sous-voies de placement (20) ;
et optionnellement dans lequel les moyens d'encaissage (46) comprennent m rangées (R) de n têtes de préhension (48a), les m rangées (R) de n têtes de préhension (48a) étant aptes à se rapprocher les unes des autres dans la direction transversale (DT) de manière assurer l'encaissage des m rangées (R) de n produits (A) à l'intérieur d'un réceptacle de conditionnement (C).

11. Dispositif d'encaissage selon la revendication 9, comprenant un bras tacleur (40) positionné entre la sous-voie de placement tampon (22) et la sous-voie de placement (20) adjacente à cette sous-voie de placement tampon (22), le bras tacleur (40) étant apte à se déplacer selon la direction transversale (DT) pour regrouper dans la direction transversale (DT) les m rangées (R) de n produits (A) de manière à rendre ces m rangées (R) attenantes les unes aux autres dans cette direction transversale (DT).

12. Dispositif d'encaissage selon l'une quelconque des revendications 8 à 11, dans lequel les moyens d'accumulation (36) comportent une paroi d'arrêt (38) apte à stopper la progression des n produits (A) le long des m sous-voies de placement (20).

13. Dispositif d'encaissage selon l'une quelconque des revendications 8 à 11, dans lequel les moyens d'accumulation (36) comportent une paroi d'arrêt apte à ralentir sans la stopper la progression des n produits (A) le long des m sous-voies de placement (20).

14. Dispositif d'encaissage selon l'une quelconque des revendications 8 à 13, comportant des moyens de formation (56) aptes à mettre en forme des réceptacles de conditionnement (C) et des moyens d'alimentation (50) aptes à transporter ces réceptacles de conditionnement (C) le long d'une deuxième voie d'approvisionnement (VC) positionnée à proximité des sous-voies de placement (20) et s'étendant selon une direction sensiblement longitudinal (DL) ;
et comprenant optionnellement l'une et/ou l'autre des caractéristiques suivantes :
- les moyens d'alimentation (50) sont aptes à transporter les réceptacles de conditionnement (C) selon un sens de déplacement opposé au sens de déplacement des m rangées (R) de n produits (A) accumulés le long des m sous-voies de placement (20) ;
- les moyens de formation (56) sont aptes à former les réceptacles de conditionnement (C) par pliage et collage d'un feuillet (48) en amont de la deuxième voie d'approvisionnement (VC).

15. Dispositif d'encaissage selon l'une quelconque des revendications 8 à 14, dans lequel les moyens de déport (24) comprennent :
_un module de préhension (26) apte à enserrer une succession de n produits (A) de manière à permettre l'entraînement de ces n produits (A) dans un déplacement relatif vis-à-vis de la première voie d'approvisionnement (VA) ;
_un module de motorisation (30) apte à assurer simultanément le déplacement du module de préhension (26) dans la direction transversale (DT), d'une part, et le déplacement de ce module de préhension (26) dans la direction longitudinale (DL) sans perte de vitesse par rapport au flux continu d'approvisionnement (FA), d'autre part ;
_de manière à assurer un déplacement de la succession de n produits (A) dans la direction transversale (DT) sans retard par rapport au flux continu d'approvisionnement (FA) de produits (A).

## Patentansprüche

1. Verpackungsverfahren, welches dazu vorgesehen ist, ausgehend von einem kontinuierlichen Zulieferungsstrom (FA) von ähnlichen Produkten (A) ein sequentielles Verpacken von Chargen (L) von Produkten (A) im Inneren von Aufnahmebehältern (C) durchzuführen, wobei die Chargen (L) aus m Reihen (R) von jeweils n Produkten (A) gebildet sind, wobei m und n ganze Zahlen größer oder gleich eins sind, wobei m x n streng größer als eins ist, wobei das Verpackungsverfahren eine Abfolge von Schritten umfasst, bestehend aus:
- Liefern eines kontinuierlichen Zulieferungsstroms (FA) von ausgerichteten Produkten (A) entlang eines ersten Zulieferungswegs (VA), welcher sich entlang einer longitudinalen Richtung (DL) erstreckt; und
- Verschieben von m Abfolgen von n Produkten (A) gemäß m Reihen (R), welche jeweils entlang m separaten Unter-Platzierungswegen (20) angeordnet sind, welche benachbart zu dem ersten Zulieferungsweg (VA) angeordnet sind, um m Verlagerungen in transversale Richtungen (DT) ohne Verzögerung gegenüber gegenüber dem kontinuierlichen Zulieferungsstrom (FA);
- Ansammeln und Zusammenfassen der n Produkte (A) von jeder Reihe (R) in der longitudinalen Richtung (DL) entlang m Unter-Platzierungswegen (20) derart, dass eine erste Charge (L) von m x n Produkten (A) gebildet wird;
- Sequentielles Verpacken der m Reihen (R) von n Produkten (A), welche die erste Charge (L) bilden, im Inneren des ersten Aufnahmebehälters (C);
**dadurch gekennzeichnet, dass** das Verpackungsverfahren besteht aus:
- Einleiten des Verschiebungsschritts von einer ersten Abfolge von n Produkten (A), welche dazu vorgesehen sind, eine erste Reihe (R) einer zweiten Charge (L) zu bilden, während der Ansammelphase von einer der Reihen (R) von n Produkten (A), welche die erste Charge (L) bilden;
- wobei diese erste Abfolge von n Produkten (A) dazu vorgesehen ist, eine erste Reihe (R) einer zweiten Charge (L) zu bilden, welche um eine transversale Verlagerung (DT) ohne Verzögerung gegenüber dem kontinuierlichen Zulieferungsstrom (FA) verschoben wird, entlang eines separaten Puffer-Unter-Platzierungswegs (22), welcher benachbart zu den m Unter-Platzierungswegen (20) ist, auf welchen die m Reihen (R) von n Produkten (A) gebildet sind, welche die erste Charge (L) bilden;
- derart, dass die Ansammlung und das Zusammenfassen der Produkte (A), welche die erste Charge (L) bilden, ohne Unterbrechung oder Behinderung des kontinuierlichen Zulieferungsstroms (FA) von Produkten (A) erlaubt wird; und
- Einleiten des Verpackungsschritts der ersten Charge (L) im Wesentlichen ohne Verzögerung, nach der Ansammlung und dem Zusammenfassen der ersten Charge (L), derart, dass das Verpacken ohne Unterbrechung oder Behinderung des kontinuierlichen Zulieferungsstroms (FA) von Produkten (A) erlaubt wird.

2. Verpackungsverfahren nach Anspruch 1, wobei der Verschiebungsschritt der m Abfolgen von n Produkten (A) aus einem Positionieren der m Reihen (R) von n Produkten (A) entlang den m Unter-Platzierungswegen (20) besteht, so dass die m Reihen (R) von n Produkten (A) voneinander um eine vorbestimmte Abstandsstrecke in der transversalen Richtung (DT) beabstandet sind.

3. Verpackungsverfahren nach Anspruch 2, wobei Platzierungsschienen mit einer Stärke, welche der Abstandsstrecke entspricht, so angeordnet sind, dass die Führung, die transversale Positionierung und das In-Position-Halten der m Abfolgen von n Produkten (A) entlang den m Unter-Platzierungswegen (20) sichergestellt wird.

4. Verpackungsverfahren nach Anspruch 2 oder 3, wobei der Verpackungsschritt von Verpackungsmitteln (46) durchgeführt wird, welche m Reihen (R) von n Greifköpfen (48a) umfassen, wobei die m Reihen (R) von n Greifköpfen (48a) in der transversalen Richtung (DT) während des Verpackungsschritts der m Reihen (R) von n Produkten (A) im Inneren eines Aufnahmebehälters (C) aneinander annähern.

5. Verpackungsverfahren nach Anspruch 2, umfassend einen Umgruppierungsschritt, welcher am Ende des Ansammlungsschritts der m Reihen (R) von n Produkten (A) stattfindet und aus einem Umgruppieren der m Reihen (R) von n Produkten (A) in der transversalen Richtung (DT) besteht, derart, dass diese m Reihen (R) in dieser transversalen Richtung (DT) aneinander angrenzen;
und wobei dieser Umgruppierungsschritt gegebenenfalls mittels eines Eingriffsarms (40) durchgeführt wird, welcher zwischen dem Puffer-Unter-Platzierungsweg (22) und dem Unter-Platzierungsweg (20) benachbart zu dem Puffer-Unter-Platzierungsweg (22) angeordnet ist, wobei der Eingriffsarm (40) sich gemäß der transversalen Richtung (DT) verschiebt, um in der transversalen Richtung (DT) die m Reihen (R) von n Produkten (A) so umzugruppieren, dass diese m Reihen (R) in dieser transversalen Richtung (DT) aneinander angrenzen.

6. Verpackungsverfahren nach einem der Ansprüche 1 bis 5, ferner umfassend eines der folgenden Merkmale:
- der Schritt des Ansammelns und Zusammenfassens der n Produkte (A) von jeder Reihe (R) wird mittels einer Anschlagwand (38) durchgeführt, welche das Fortschreiten der n Produkte (A) entlang den m Unter-Platzierungswegen (20) stoppt;
- der Schritt des Ansammelns und Zusammenfassens der n Produkte (A) von jeder Reihe (R) wird mittels einer Anschlagwand durchgeführt, welche das Fortschreiten der n Produkte (A) entlang den m Unter-Platzierungswegen (20) abbremst ohne sie anzuhalten.

7. Verpackungsverfahren nach einem der Ansprüche 1 bis 6, wobei die Aufnahmebehälter (C) in Form gebracht und dann entlang eines zweiten Zulieferungswegs (VC) transportiert werden, welcher in der Nähe der Unter-Platzierungswege (20) angeordnet ist und sich entlang einer im Wesentlichen longitudinalen Richtung (DL) erstreckt;
wobei das Verpackungsverfahren gegebenenfalls das eine oder/und das andere der folgenden Merkmale umfasst:
- die Aufnahmebehälter (C) werden gemäß eines Versetzungssinns versetzt, welcher dem Versetzungssinn der m Reihen (R) von n Produkten (A) entgegengesetzt ist, welche entlang der m Unter-Platzierungswege (20) angesammelt werden;
- die Aufnahmebehälter (C) werden durch Biegen und Kleben eines Blatts (58) vor dem zweiten Zulieferungsweg (VC) gebildet.

8. Verpackungsvorrichtung, welche vorgesehen ist, ein sequentielles Verpackungsverfahren von Chargen (L) von Produkten (A) im Inneren von Aufnahmebehältern (C) nach einem der Ansprüche 1 bis 7 durchzuführen, wobei die Chargen (L) aus m Reihen (R) von jeweils n Produkten (A) gebildet sind, wobei m und n ganze Zahlen größer oder gleich eins sind, wobei m x n streng größer als eins ist, wobei die Verpackungsvorrichtung umfasst:
- einen ersten Zulieferungsweg (VA), welcher sich entlang einer longitudinalen Richtung 10 (DL) erstreckt;
- Liefermittel (16), welche dazu in der Lage sind, einen kontinuierlichen Zulieferungsstroms (FA) von Produkten (A) zu liefern, welche entlang des ersten Zulieferungswegs (VA) ausgerichtet sind;
- Verschiebungsmittel (24), welche in der Lage sind, m Abfolgen von n Produkten (A) gemäß m Reihen (R), welche jeweils entlang m separaten Unter-Platzierungswegen (20) angeordnet sind, welche benachbart zu dem ersten Zulieferungsweg (VA) angeordnet sind, um m Verlagerungen in transversale Richtungen (DT) ohne Verzögerung gegenüber gegenüber dem kontinuierlichen Zulieferungsstrom (FA) zu verschieben;
- Ansammlungsmittel (36), welche in der Lage sind, die n Produkte (A) von jeder Reihe (R) in der longitudinalen Richtung (DL) entlang ihrer m Unter-Platzierungswege (20) derart anzusammeln und zusammenzufassen, dass eine erste Charge (L) von m x n Produkten (A) gebildet wird;
- Verpackungsmittel (46), welche in der Lage sind, die m Reihen (R) von n Produkten (A), welche die erste Charge (L) bilden, im Inneren des ersten Aufnahmebehälters (C) sequentiell zu verpacken;
**dadurch gekennzeichnet, dass**:
- die Verschiebungsmittel (24) in der Lage sind, eine erste Abfolge von n Produkten (A), welche dazu vorgesehen sind, eine erste Reihe (R) einer zweiten Charge (L) zu bilden, in einer transversalen Verschiebung (DT) ohne Verzögerung bezüglich des kontinuierlichen Zulieferungsstroms (FA) zu verschieben, entlang eines separaten Puffer-Unter-Platzierungswegs (22), welcher benachbart zu den m Unter-Platzierungswegen (20) ist, auf welchen die m Reihen (R) von n Produkten (A) gebildet wein können, welche die erste Charge (L) bilden, derart, dass das Ansammeln und das Zusammenfassen der Produkte (A), welche die erste Charge (L) bilden, ohne Unterbrechung oder Behinderung des kontinuierlichen Zulieferungsstroms (FA) von Produkten (A) erlaubt wird; und
- die Verpackungsmittel (46) dazu eingerichtet sind, das Verpacken der ersten Charge (L) im Wesentlichen ohne Verzögerung, nach der Ansammlung und dem Zusammenfassen der ersten Charge (L) derart durchzuführen, dass das Verpacken ohne Unterbrechung oder Behinderung des kontinuierlichen Zulieferungsstroms (FA) erlaubt wird.

9. Verpackungsvorrichtung nach Anspruch 8, wobei die m Unter-Platzierungswege (20) derart eingerichtet sind, dass die m Reihen (R) von n Produkten (A) voneinander um eine vorbestimmte Abstandsstrecke in der transversalen Richtung (DT) beabstandet sind.

10. Verpackungsvorrichtung nach Anspruch 9, umfassend Platzierungsschienen von einer Stärke, welche der Abstandsstrecke entspricht, welche so angeordnet sind, dass die Führung, die transversale Positionierung und das In-Position-Halten der m Abfolgen von n Produkten (A) entlang den m Unter-Platzierungswegen (20) sichergestellt wird;
und wobei gegebenenfalls die Verpackungsmittel (46) m Reihen (R) von n Greifköpfen (48a) umfassen, wobei die m Reihen (R) von n Greifköpfen (48a) in der Lage sind, sich in der transversalen Richtung (DT) derart aneinander anzunähern, dass die Verpackung der m Reihen (R) von n Produkten (A) im Inneren eines Aufnahmebehälters (C) sichergestellt wird.

11. Verpackungsvorrichtung nach Anspruch 9, umfassend einen Eingriffsarm (40), welcher zwischen dem Puffer-Unter-Platzierungsweg (22) und dem Unter-Platzierungsweg (20) benachbart zu dem Puffer-Unter-Platzierungsweg (22) angeordnet ist, wobei der Eingriffsarm (40) dazu in der Lage ist, sich gemäß der transversalen Richtung (DT) zu verschieben, um in der transversalen Richtung (DT) die m Reihen (R) von n Produkten (A) so umzugruppieren, dass diese m Reihen (R) in dieser transversalen Richtung (DT) aneinander angrenzen.

12. Verpackungsvorrichtung nach einem der Ansprüche 8 bis 11, wobei die Ansammlungsmittel (36) eine Anschlagwand (38) umfassen, welche in der Lage ist, das Fortschreiten der n Produkte (A) entlang den m Unter-Platzierungswegen (20) zu stoppen.

13. Verpackungsvorrichtung nach einem der Ansprüche 8 bis 11, wobei die Ansammlungsmittel (36) eine Anschlagwand umfassen, welche in der Lage ist, das Fortschreiten der n Produkte (A) entlang den m Unter-Platzierungswegen (20) abzubremsen ohne sie anzuhalten.

14. Verpackungsvorrichtung nach einem der Ansprüche 8 bis 13, umfassend Formgebungsmittel (56), welche in der Lage sind, die Aufnahmebehälter (C) in Form zu bringen, und Zuführmittel (50), welche in der Lage sind, die Aufnahmebehälter (C) entlang eines zweiten Zulieferungswegs (VC) zu transportieren, welcher in der Nähe der Unter-Platzierungswege (20) angeordnet ist und sich entlang einer im Wesentlichen longitudinalen Richtung (DL) erstreckt;
und gegebenenfalls umfassend das eine oder/und das andere der folgenden Merkmale:
- die Zuführmittel (50) sind in der Lage, die Aufnahmebehälter (C) gemäß eines Versetzungssinns zu transportieren, welcher dem Versetzungssinn der m Reihen (R) von n Produkten (A) entgegengesetzt ist, welche entlang der m Unter-Platzierungswege (20) angesammelt sind;
- die Formgebungsmittel (56) sind in der Lage, die Aufnahmebehälter (C) durch Biegen und Kleben eines Blatts (48) vor dem zweiten Zulieferungsweg (VC) zu bilden.

15. Verpackungsvorrichtung nach einem der Ansprüche 8 bis 14, wobei die Verschiebungsmittel (24) umfassen:
- ein Greifmodul (26), welches in der Lage ist, eine Abfolge von n Produkten (A) derart zu umschließen, dass das Zuliefern dieser n Produkte (A) in einer relativen Verschiebung gegenüber dem ersten Zulieferungsweg (VA) ermöglicht wird;
- ein Motorisierungsmodul (30), welches in der Lage ist, gleichzeitig das Versetzen des Greifmoduls (26) in der transversalen Richtung (DT) einerseits und das Versetzen dieses Greifmoduls (26) in der longitudinalen Richtung (DL) ohne Geschwindigkeitsverlust bezüglich des kontinuierlichen Zulieferungsstroms (FA) andererseits sicherzustellen;
- derart, dass ein Versetzen der Abfolge von n Produkten (A) in der transversalen Richtung (DT) ohne Verzögerung bezüglich des kontinuierlichen Zulieferungsstroms (FA) von Produkten (A) sichergestellt wird.

## Claims

1. A boxing method intended, from a continuous supply flow (FA) of similar products (A), for sequentially boxing batches(L) of products (A) inside packaging containers (C), the batches (L) being formed of m rows (R) of n products (A) each, m and n being integers greater than or equal to 1, m*n being strictly greater than 1, the boxing method comprising a succession of steps consisting of:
conveying a continuous supply flow (FA) of aligned products (A) along a first supply line (VA) extending in a longitudinal direction (DL); and
sending, by m movements in transverse directions (DT) with no lag relative to the continuous supply flow (FA), m successions of n products (A) in m rows (R) respectively positioned along m distinct positioning sub-lines (20), arranged to be adjacent in the first supply line (VA);
collecting and assembling in the longitudinal direction (DL) the n products (A) of each row (R) along m positioning sub-lines (20) so as to form a first batch (L) of mxn products (A);
sequentially boxing said m rows (R) of n products (A) constituting the first batch (L), inside a first packaging container (C);
wherein the boxing method consists of:
initiating the step of sending a first succession of n products (A) intended to form a first row (R) of a second batch (L), during the phase of collecting one of the rows (R) of n products (A) constituting the first batch (L),
this first succession of n products (A) intended to form a first row (R) of a second batch (L) being sent, in a transverse movement (DT) with no lag relative to the continuous supply flow (FA), along a separate buffer positioning sub-line (22) adjacent to the m positioning sub-lines (20) on which the m rows (R) of n products (A) constituting the first batch (L) have been formed,
so as to allow the collection and assembly of products (A) constituting the first batch (L) without interrupting or slowing the continuous supply flow (FA) of products (A); and
initiating the step of boxing the first batch (L) with no substantial delay after the collection and assembly of the first batch (L), in a manner that allows the boxing to occur without interrupting or slowing the continuous supply flow (FA) of products (A).

2. The boxing method according to claim 1, wherein the step of sending m successions of n products (A) consists of positioning the m rows (R) of n products (A) along m positioning sub-lines (20) so that the m rows (R) of n products (A) are spaced apart from each other in the transverse direction (DT) by a predetermined spacing distance.

3. The boxing method according to claim 2, wherein positioning rails of a thickness corresponding to the spacing distance are arranged to ensure the guiding, transverse positioning, and maintaining in position of m successions of n products (A) along the m positioning sub-lines (20).

4. The boxing method according to any of claims 2 to 3, wherein the boxing step is performed by boxing means (46) comprising m rows (R) of n gripper heads (48a), the m rows (R) of n gripper heads (48a) drawing closer to one another in the transverse direction (DT) during the step of boxing the m rows (R) of n products (A) inside a packaging container (C).

5. The boxing method according to claim 2, comprising a grouping step performed after the step of collecting m rows of n products and consisting of grouping the m rows (R) of n products (A) in the transverse direction (DT) so that these m rows (R) are adjacent to one another in this transverse direction (DT),
and optionally, wherein the grouping step is performed by means of a scraper arm (40) positioned between the buffer positioning sub-line (22) and the positioning sub-line (20) adjacent to said buffer positioning sub-line '22), the scraper arm (40) moving in the transverse direction (DT) to group the m rows (R) of n products (A) in the transverse direction so that these m rows ^{®} are adjacent to one another in this transverse direction (DT).

6. The boxing method according to any of claims 1 to 5, further comprising one of the following:
- the step of collecting and assembling n products(A) in each row (R) is achieved by means of a barrier wall (38) which stops the advancement of n products (A) in the m positioning sub-lines (20);
- the step of collecting and assembling n products (A) in each row (R) is achieved by means of a barrier wall which slows the advancement of the n products (A) along the m positioning sub-lines (20) without stopping them.

7. The boxing method according to ant of claims 1 to 6, wherein the packaging containers (C) are shaped and then conveyed along a second supply line(VC) positioned near the positioning sub-lines (20) and extending in a substantially longitudinal direction (DL);
The boxing method optionally further comprising one or more of the following:
- the packaging containers (C) are moved in a direction opposite the direction of motion of the m rows (R) of n products (A) collected in the m positioning sub-lines (20);
- the packaging containers (C) are shaped by folding and gluing a blank (58) upstream of the second supply line (VC).

8. A boxing device intended for carrying out a method for sequentially boxing batches (L) of products (A) inside packaging containers (C) according to ant of claims 1 to 7, the batches (L) being formed of m rows (R) of n products (A) each, m and n being integers greater than or equal to 1, m*n being strictly greater than 1, the boxing device comprising:
a first supply line (VA) extending in a longitudinal direction 10 (DL);
transport means (16) able to convey a continuous supply flow (FA) of aligned products (A) along the first supply line (VA);
offset means (24) able to send, by m movements in transverse directions (DT) with no lag relative to the continuous supply flow (FA), m successions of n products (A) in m rows (R) respectively positioned along m distinct positioning sub-lines (20) arranged in an adjacent manner in the first supply line (VA);
collection means (36) able to collect and assemble, in the longitudinal direction (DL), the n products (A) of each row (R) along its positioning sub-line (20) in a manner that forms a first batch (L) of mxn products (A);
boxing means (46) able to box sequentially said m rows (R) of n products (A) constituting the first batch (L) inside a first packaging container (C);
wherein
the offset means (24) being able to send a first succession of n products (A), intended to constitute a first row (R) of a second batch (L), in a transverse movement (DT) with no lag relative to the continuous supply flow (FA), along a separate buffer positioning sub-line (22) adjacent to the m positioning sub-lines (20) on which the m rows (R) of n products (A) constituting the first batch (L) can be formed, so as to allow the collection and assembly of products (A) constituting the first batch (L) without interrupting or slowing the continuous supply flow (FA) of products (A); and
the boxing means (46) being arranged to box the first batch (L) with no substantial delay after the collection and assembly of the first batch (L), in a manner that allows the boxing to occur without interrupting or slowing the continuous supply flow (FA).

9. The boxing device according to claim 8, wherein the m positioning sub-lines (20) are arranged so that the m rows (R) of n products (A) are spaced apart from each other in the transverse direction (DT) by a predetermined spacing distance.

10. The boxing device according to claim 9, comprising positioning rails of a thickness corresponding to the spacing distance to ensure the guiding, transverse positioning, and maintaining in position of m successions of n products (A) along the m positioning sub-lines (20);
and optionnally wherein the boxing means (46) comprise m rows (R) of n gripper heads (48a), the m rows (R) of n gripper heads (48a) being able to draw closer to one another in the transverse direction (DT) so as to box the m rows (R) of n products (A) inside a packaging container (C).

11. The boxing device according to claim 9, comprising a scraper arm (40) positioned between the buffer positioning sub-line (22) and the positioning sub-line (20) adjacent to this buffer positioning sub-line (22), the scraper arm (40) being able to move in the transverse direction (DT) to group the m rows (R) of n products (A) in the transverse direction (DT) so that these m rows (R) are adjacent to one another in this transverse direction (DT).

12. The boxing device according to ant of claims 8 to 11, wherein the collection means (36) comprise a barrier wall (38) able to stop the advancement of n products (A) along the m positioning sub-lines (20).

13. The boxing device according to any of claims 8 to 11, wherein the collection means (36) comprise a barrier wall able to slow, without stopping, the advancement of n products (A) along the m positioning sub-lines (20).

14. The boxing device according to any of claims 8 to 13, comprising shaping means (56) able to shape packaging containers (C) and supply means(50) able to convey these packaging containers (C) along a second supply line (VC) positioned near the positioning sub-lines (20) and extending in a substantially longitudinal direction (DL);
and further optionally comprising one or more of the following:
- the supply means (50) are able to convey the packaging containers (C) in a direction of motion that is opposite the direction of motion of the m rows (R) of n products (A) collected in the m positioning sub-lines (20);
the shaping means (56) are able to shape the packaging containers (C) by folding and gluing a blank (48) upstream of the second supply line (VC).

15. The boxing device according to any of claims 8 to 14, wherein the offset means (24) comprise:
a gripping module (26) able to grasp a succession of n products (A) in a manner that allows conveying these n products (A) in an offset movement relative to the first supply line (VA);
a drive module (30) simultaneously able to ensure both the movement of the gripping module (26) in the transverse direction (DT) on the one hand, and the movement of this gripping module (26) in the longitudinal direction (DL) with no loss of speed relative to the continuous supply flow (FA) on the other hand;
in a manner that ensures a movement of the succession of n products (A) in the transverse direction (DT) with no lag relative to the continuous supply flow (FA) of products (A).
